# FASCICULE DE BREVET EUROPEEN

(11) **EP 1 080 453 B1**
(45) Date de publication et mention de la délivrance du brevet: **09.10.2002**
(21) Numéro de dépôt: 99918033.4
(22) Date de dépôt: 10.05.1999
(51) Int. Cl.: G07F 7/10

(54) **PROCEDE D'AUTHENTIFICATION D'UN CODE PERSONNEL D'UN UTILISATEUR D'UNE CARTE A CIRCUIT INTEGRE**
AUTHENTIFIZIERUNGSVERFAHREN EINES PERSÖNLICHEN KODES EINES CHIPKARTENBENÜTZERS
METHOD FOR AUTHENTICATING AN INTEGRATED CIRCUIT CARD USER'S PERSONAL CODE

(30) Priorité: 20.05.1998 FR 9806395
(43) Date de publication de la demande: 07.03.2001
(73) Titulaire: SCHLUMBERGER Systèmes, 92120 Montrouge (FR)
(72) Inventeur: SLASSI, Tarik, F-75016 Paris (FR)
(86) Numéro de dépôt international: FR9901096
(87) Numéro de publication internationale: WO99060535

(56) Documents cités:
- EP-A- 0 587 375
- EP-A- 0 596 276
- EP-A- 0 763 791
- DE-A- 19 527 715
- IE-A- 960 815

## Description

La présente invention concerne un procédé d'authentification du code personnel d'un utilisateur d'une carte à circuit intégré telle qu'une carte bancaire, par exemple lors d'opérations de paiement réalisées à partir d'un ordinateur relié à un réseau.

Pour réaliser de telles opérations, on utilise couramment un lecteur de cartes à circuit intégré relié au port série de l'ordinateur pour former une simple interface entre l'ordinateur et le circuit intégré de la carte.

Les procédés d'authentification d'un code personnel actuellement mis en oeuvre comportent les étapes de saisir un code sur le clavier de l'ordinateur, de mettre le code saisi dans un format intelligible par le circuit intégré de la carte, puis de transmettre le code formaté et une commande d'authentification de ce code au lecteur qui les transmet à son tour au circuit intégré de la carte, lequel réalise alors l'authentification du code reçu avec le code personnel de l'utilisateur mémorisé dans le circuit intégré (voir EP-A-0 596 276). Au moment où l'utilisateur saisit son code, un fraudeur risque de s'emparer de ce code en accédant, directement ou par l'intermédiaire du réseau, à la mémoire de l'ordinateur dans laquelle le code saisi est mémorisé avant d'être transmis au lecteur. Le fraudeur peut également s'emparer de ce code en envoyant au circuit intégré de la carte, au lieu de la commande d'authentification, une instruction de mémorisation du code dans une mémoire du circuit intégré à laquelle le fraudeur pourra accéder ultérieurement. Le risque de fraude est donc important avec les procédés d'authentification actuels. Ce risque est lié à l'utilisation du clavier de l'ordinateur pour saisir le code à authentifier.

Un but de l'invention est de proposer un procédé d'authentification du code personnel d'un utilisateur d'une carte à circuit intégré permettant une protection maximale du code personnel et pouvant être mis en oeuvre à partir d'un lecteur de cartes à circuit intégré disposant de moyens électroniques simples.

En vue de la réalisation de ce but, la carte à circuit intégré étant reçue dans un lecteur équipé d'un clavier et relié à un ordinateur et pouvant admettre au moins un type de carte, le procédé selon l'invention comprend les étapes de :
- reconnaître le type de carte introduite dans le lecteur,
- transmettre de l'ordinateur au lecteur des instructions de formatage correspondant au type de la carte et une commande d'authentification de ce code,
- vérifier la commande d'authentification dans le lecteur,
- pour une commande d'authentification conforme, mettre le lecteur dans un mode sécurisé,
- saisir le code sur le clavier du lecteur et formater le code saisi,
- transmettre du lecteur au circuit intégré de la carte le code formaté et la commande d'authentification de celui-ci.

Ainsi, la saisie du code ne peut être réalisée qu'après vérification que la commande d'authentification destinée à être transmise au circuit intégré de la carte est conforme et mise du lecteur en mode sécurisé. Il n'est donc plus possible d'intervenir sur la saisie par l'intermédiaire de l'ordinateur ou du réseau auquel celui-ci est relié.

Préférentiellement, le procédé de la présente invention comprend, préalablement à la saisie d'un code, l'étape d'informer l'utilisateur que le lecteur est dans le mode sécurisé.

Préférentiellement, le procédé de la présente invention comprend, ultérieurement à la mise du lecteur dans le mode sécurisé, l'étape d'autoriser la saisie du code.

Avantageusement, le mode sécurisé interdit une exécution d'instructions permettant un accès de l'ordinateur au code saisi.

Préférentiellement, le procédé de la présente invention comprend, simultanément à l'étape de saisie et de formatage du code, l'étape d'assurer que toute instruction provenant de l'ordinateur pendant cette étape est compatible avec le maintien du lecteur dans le mode sécurisé.

Préférentiellement, le procédé de la présente invention comprend, ultérieurement à la transmission du code formaté au circuit intégré, l'étape de comparer dans le circuit intégré de la carte, le code reçu avec le code personnel de l'utilisateur mémorisé dans le circuit intégré.

Préférentiellement, le procédé de la présente invention comprend, l'étape de transmettre le résultat de la comparaison du circuit intégré à l'ordinateur par l'intermédiaire du lecteur.

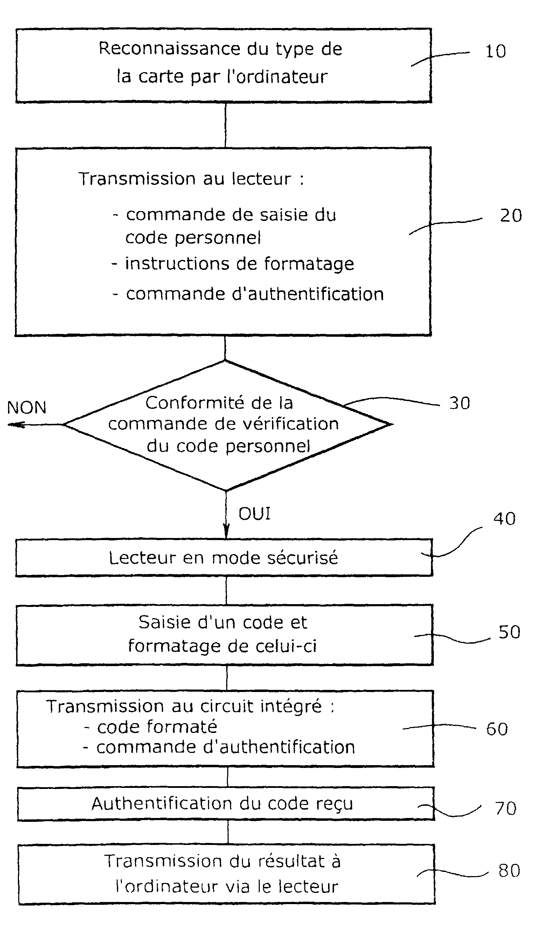

D'autres caractéristiques et avantages de l'invention ressortiront à la lecture de la description qui suit d'un mode de mise en oeuvre particulier non limitatif de l'invention, en relation avec la figure unique annexée représentant un schéma par blocs du procédé selon l'invention.

Le procédé d'authentification d'un code personnel d'un utilisateur d'une carte à circuit intégré selon l'invention est mis en oeuvre à partir d'un lecteur destiné à recevoir la carte à circuit intégré, le lecteur étant équipé d'un clavier et étant relié à un ordinateur lui-même relié à un réseau. Le lecteur employé peut admettre au moins un type de carte.

En référence à la figure, le procédé d'authentification débute par une étape 10 de reconnaissance du type de la carte à circuit intégré reçue dans le lecteur. La reconnaissance du type se fait au moyen de l'ordinateur.

L'ordinateur transmet ensuite au lecteur, lors d'une étape 20, des instructions de formatage du code saisi et une commande d'authentification de ce code. Les instructions de formatage sont déterminées en fonction du type de la carte à circuit intégré et permettent de rendre le code saisi sur le clavier du lecteur intelligible pour le circuit intégré. La commande d'authentification du code est destinée à être exécutée par le circuit intégré et dépend donc également du type de celui-ci. On notera que dans un mode de réalisation particulier, on intègre les instructions de formatage ainsi que la commande d'authentification dans une commande de type lecteur, cette dernière permettant la transmission au lecteur.

A la réception de ces informations, une étape 30 de vérification de la conformité de la commande d'authentification du code saisi est réalisée par le lecteur. Cette étape a pour finalité de s'assurer que la commande envoyée par l'ordinateur à destination du circuit intégré est bien la commande d'authentification du code reçu (commande de type VERIFY_PIN) et non pas une commande de mémorisation du code reçu dans une mémoire de la carte à circuit intégré à laquelle il serait possible d'accéder par l'ordinateur ou par le réseau (par exemple une commande de type UPDATE_RECORD).

Si la commande n'est pas conforme, l'échange d'informations entre l'ordinateur et le lecteur est par exemple interrompu, et il est signalé à l'utilisateur par l'intermédiaire de l'écran de l'ordinateur, qu'il n'est pas possible de sécuriser la saisie du code personnel.

Si la commande d'authentification est conforme, le lecteur est mis dans un mode sécurisé et la saisie d'un code est autorisée par le lecteur lors d'une étape 40. Le mode sécurisé correspond à un état du lecteur dans lequel toutes les instructions émises par l'ordinateur à destination du lecteur sont analysées par ce dernier avant exécution afin qu'aucune des instructions exécutées par le lecteur ne corresponde à un transfert immédiat ou ultérieur du code saisi vers l'ordinateur ou vers tout autre dispositif accessible à un fraudeur. Parmi ces instructions, on peut citer une instruction commandant au lecteur de vider vers l'ordinateur sa mémoire tampon de transit de données contenant le code saisi avant transmission au circuit intégré.

A l'issue de cette étape 40, on peut prévoir que l'utilisateur soit informé que le lecteur est en mode sécurisé et que l'utilisateur est donc autorisé à saisir son code personnel. Cette information est par exemple dispensée par le clignotement d'un avertisseur lumineux porté par le lecteur accompagné par un message affiché sur l'écran de l'ordinateur demandant à l'utilisateur de saisir son code.

L'étape 50 de saisie du code personnel par l'utilisateur sur le clavier du lecteur est alors réalisée. A la saisie de chaque élément du code, on peut prévoir que le lecteur émette un signal vers l'ordinateur pour que soit affiché sur l'écran de celui-ci un caractère neutre, par exemple un caractère ASCII tel qu'un astérisque, informant l'utilisateur du nombre d'éléments du code saisi qui ont été pris en compte. Après saisie du code, le lecteur procède au formatage de celui-ci à partir des instructions de formatage qui lui ont été communiquées par l'ordinateur. Simultanément à l'étape de saisie et de formatage du code, on assure que toute instruction provenant de l'ordinateur pendant cette étape est compatible avec le maintien du lecteur dans le mode sécurisé.

Le code formaté et la commande d'authentification du code sont ensuite transmis par le lecteur au circuit intégré de la carte lors d'une étape 60. On notera que dans un mode de réalisation particulier, on intègre ledit code formaté dans la commande d'authentification.

L'étape d'authentification 70 est alors déclenchée. Pendant cette étape, le circuit intégré procède à la comparaison du code reçu et du code personnel de l'utilisateur stocké dans une des mémoires du circuit intégré

Le résultat de cette comparaison est transmis à l'ordinateur via le lecteur lors d'une étape 80.

On notera que le mode sécurisé est maintenu pendant les étapes 40 et 50 et plus généralement tant que le lecteur est en possession du code saisi. Pour une plus grande sécurité, le mode sécurisé pourra être maintenu jusqu'à l'étape 80.

Bien entendu l'invention n'est pas limitée au mode de réalisation décrit et on peut y apporter des variantes de réalisation sans sortir du cadre de l'invention tel que défini par les revendications.

En particulier, on pourra prévoir sur le clavier du lecteur et/ou sur le clavier de l'ordinateur qu'un moyen tel qu'une touche permette à l'utilisateur d'interrompre la saisie du code, ledit moyen pouvant être déclenché à tout moment, en particulier lors du mode sécurisé.

## Revendications

1. Procédé d'authentification d'un code personnel d'un utilisateur d'une carte à circuit intégré reçue dans un lecteur équipé d'un clavier et relié à un ordinateur et pouvant admettre au moins un type de carte, **caractérisé en ce que** le procédé comprend les étapes de :
- reconnaître le type de carte introduite dans le lecteur,
- transmettre de l'ordinateur au lecteur des instructions de formatage correspondant au type de la carte et une commande d'authentification de ce code,
- vérifier la commande d'authentification dans le lecteur,
- pour une commande d'authentification conforme, mettre le lecteur dans un mode sécurisé,
- saisir le code sur le clavier du lecteur et formater le code saisi,
- transmettre du lecteur au circuit intégré de la carte le code formaté et la commande d'authentification de celui-ci.

2. Procédé selon la revendication 1, **caractérisé en ce qu'**il comprend, préalablement à la saisie d'un code, l'étape d'informer l'utilisateur que le lecteur est dans le mode sécurisé.

3. Procédé selon les revendications 1 ou 2, **caractérisé en ce qu'**il comprend, ultérieurement à la mise du lecteur dans le mode sécurisé, l'étape d'autoriser la saisie du code.

4. Procédé selon l'une des revendications précédentes, **caractérisé en ce que** le mode sécurisé interdit une exécution d'instructions permettant un accès de l'ordinateur au code saisi.

5. Procédé selon l'une des revendications précédentes, **caractérisé en ce qu'**il comprend, simultanément à l'étape de saisie et de formatage du code, l'étape d'assurer que toute instruction provenant de l'ordinateur pendant cette étape est compatible avec le maintien du lecteur dans le mode sécurisé.

6. Procédé selon l'une des revendications précédentes, **caractérisé en ce qu'**il comprend, ultérieurement à la transmission du code formaté au circuit intégré, l'étape de comparer dans le circuit intégré de la carte, le code reçu avec le code personnel de l'utilisateur mémorisé dans le circuit intégré.

7. Procédé selon la revendication 6, **caractérisé en ce qu'**il comprend l'étape de transmettre le résultat de la comparaison du circuit intégré à l'ordinateur par l'intermédiaire du lecteur.

## Claims

1. A method of authenticating a personal code of a user of an integrated circuit card received in a reader fitted with a keypad, connected to a computer, and capable of accepting at least one type of card, the method being **characterized in that** it comprises the steps of:
· recognizing the type of card inserted in the reader;
· transmitting formatting instructions from the computer to the reader, said instructions corresponding to the type of the card, and sending a command for authenticating the code;
· verifying the authentication command in the reader;
· for a compliant authentication command, putting the reader into a secure mode;
· inputting the code via the keypad of the reader and formatting the code as input; and
· transmitting the formatted code and the command for authenticating it from the reader to the integrated circuit of the card.

2. A method according to claim 1, **characterized in that** prior to inputting a code, it includes a step of informing the user that the reader is in secure mode.

3. A method according to claim 1 or 2, **characterized in that**, subsequent to putting the reader in secure mode, it includes a step of authorizing code input.

4. A method according to any preceding claim, **characterized in that** secure mode prevents the execution of instructions that enable the computer to access the input code.

5. A method according to any preceding claim, **characterized in that**, simultaneously with the step of inputting and formatting the code, it includes a step of ensuring that any instruction coming from the computer during this step is compatible with keeping the reader in secure mode.

6. A method according to any preceding claim, **characterized in that**, subsequent to transmitting the formatted code to the integrated circuit, it includes a step performed in the integrated circuit of the card, in which step the received code is compared with the personal code of the user as stored in the integrated circuit.

7. A method according to claim 6, **characterized in that** it includes the step of transmitting the result of the comparison from the integrated circuit to the computer via the reader.

## Patentansprüche

1. Authentifizierungsverfahren eines persönlichen Benutzercodes einer Integrated Circuit Card (Karte mit integrierter Schaltung), die in einen mit einer Tastatur ausgestatteten und an einen Computer angeschlossenen Leser eingeführt wird, welcher für mindestens einen Kartentyp zugelassen ist, **gekennzeichnet dadurch, dass** das Verfahren folgende Stufen umfasst:
- den Typ der in den Leser eingeführten Karte erkennen,
- die dem Kartentyp entsprechenden Formatierungsanweisungen sowie einen Authentifizierungsbefehl dieses Codes vom Computer zum Leser übertragen,
- den Authentifizierungsbefehl im Leser überprüfen,
- wenn der Authentifizierungsbefehl korrekt ist, den Leser in einen abgesicherten Modus schalten,
- den Code über die Tastatur des Lesers eingeben und den eingegebenen Code formatieren,
- den formatierten Code und seinen Authentifizierungsbefehl vom Leser zur integrierten Schaltung der Karte übertragen.

2. Verfahren gemäss Patentanspruch 1, **gekennzeichnet dadurch, dass** es vor der Eingabe eines Codes die Stufe umfasst, in welcher der Benutzer informiert wird, dass der Leser im abgesicherten Modus ist.

3. Verfahren gemäss Patentansprüche 1 oder 2, **gekennzeichnet dadurch, dass** es nach dem Schalten des Lesers in den abgesicherten Modus die Stufe zur Freigabe der Eingabe des Codes enthält.

4. Verfahren gemäss einem der vorausgehenden Patentansprüche, **gekennzeichnet dadurch, dass** der abgesicherte Modus eine Ausführung von Anweisungen, die den Zugriff des Computers zu dem eingegebenen Code erlauben, verbietet.

5. Verfahren gemäss einem der vorausgehenden Patentansprüche, **gekennzeichnet dadurch, dass** es gleichzeitig mit der Stufe zur Code-Eingabe und -Formatierung die Stufe zur Gewährleistung, dass alle während dieser Stufe vom Computer kommenden Anweisungen mit der Aufrechterhaltung des Lesers im abgesicherten Modus kompatibel sind, umfasst.

6. Verfahren gemäss einem der vorausgehenden Patentansprüche, **gekennzeichnet dadurch, dass** es nach der Übertragung des formatierten Codes in die integrierte Schaltung die Stufe zum Vergleich in der integrierten Schaltung der Karte des empfangenen Codes mit dem in der integrierten Schaltung gespeicherten persönlichen Benutzercode umfasst.

7. Verfahren gemäss Patentanspruch 6, **gekennzeichnet dadurch, dass** es die Stufe zur Übertragung des Vergleichsergebnisses der integrierten Schaltung zum Computer mit Hilfe des Lesers umfasst.
